(19) Europäisches Patentamt
European Patent Office
Office européen des brevets

(11) EP 2 388 291 A1

(12) EUROPÄISCHE PATENTANMELDUNG

(43) Veröffentlichungstag:
**23.11.2011 Patentblatt 2011/47**

(51) Int Cl.:
***C08J 9/00*** *(2006.01)* ***C08J 9/28*** *(2006.01)*

(21) Anmeldenummer: **10163186.9**

(22) Anmeldetag: **18.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **STO AG**
**79780 Stühlingen (DE)**

(72) Erfinder:
- **Weier, Andreas**
**84508 Burgkirchen an der Alz (DE)**
- **Hitzler, Martin**
**83342 Tacherting (DE)**

(74) Vertreter: **Gottschalk, Matthias**
**c/o Maiwald Patentanwaltsgesellschaft (Schweiz) mbH**
**Splügenstrasse 8**
**8002 Zürich (CH)**

(54) **Gebäudebauelement**

(57) Beschrieben werden Gebäudebauelemente umfassend einen Verbund-Werkstoff, umfassend als Komponente (i) mindestens einen nanoporösen Polymerschaumstoff, erhältlich durch Umsetzung von ein oder mehreren Epoxidharzen mit einem amphiphilen Epoxidharzhärter in Wasser im Sinne einer Phaseninversionspolymerisation, und als Komponente (ii) mindestens einen anorganischen Füllstoff und/oder anorganische Fasern, mit der Maßgabe, dass Glashohlkugeln als Füllstoffe ausgeschlossen sind. Diese Gebäudebauelemente können zur Dämmung von Gebäuden und Gebäudeteilen im Innen- und Außenbereich verwendet werden.

EP 2 388 291 A1

## Beschreibung

Gebiet der Erfindung

Die Erfindung betrifft ein Gebäudebauelement umfassend Verbund-Werkstoffe auf Basis nanoporöser Polymerschaumstoffe sowie deren Verwendung.

Stand der Technik

Polymere Epoxidharze sind seit langem bekannt. Sie werden in der Regel durch Umsetzung von Polyepoxiden, die mit im Mittel mindestens zwei terminalen oder lateralen Epoxidgruppen pro Molekül enthalten, mit Härtern, insbesondere aminischen Härtern, bei denen es sich um Di- oder Polyamine handelt, hergestellt. Diese polymeren Epoxidharze haben vielfältige Anwendungsgebiete, wobei die Verwendung als Lacke und Beschichtungsmassen (Aufbringung einer Deckschicht auf ein Substrat), dominieren.

EP-A-1,518,875 beschreibt spezielle Härter für wasserbasierte Epoxidharzsysteme, wobei diese Härter erhältlich sind, indem man eine Mischung von (a) mindestens einem epoxidierten Polyalkylenoxid, ausgewählt aus der Gruppe der epoxidierten Polyethylenoxide, der epoxidierten Polypropylenoxide und der Polyethylenpropylenoxide, (b) mindestens einer epoxidierten aromatischen Hydroxyverbindung ausgewählt aus der Gruppe der Bisphenol-A-Epoxide und der Bisphenol-F-Epoxide und (c) mindestens einer aromatischen Hydroxyverbindung, ausgewählt aus der Gruppe Bisphenol-A und Bisphenol-F zu einem Zwischenprodukt umsetzt und dieses Zwischenprodukt anschließend mit einem Polyamin umsetzt. Offenbart ist auch die Verwendung dieser Härter zur Herstellung von Klarlacken und Beschichtungsmassen (Aufbringung einer Deckschicht auf ein Substrat, zum Beispiel für Fußbodenbeschichtungen).

Beschreibung der Erfindung

Aufgabe der vorliegenden Erfindung war es, ein Gebäudebauelement umfassend einen Verbund-Werkstoff bereitzustellen, der sich als Wärmedämm-Material eignet. Insbesondere sollten diese Materialien eine geringe Wärmeleitfähigkeit (vorzugsweise unterhalb von 0,09 W/m.K) und hohe mechanische Festigkeit (maximale Druckspannung vorzugsweise oberhalb von 1,0 Mpa) aufweisen.

Die Aufgabe wird erfindungsgemäß durch ein Gebäudebauelement nach dem unabhängigen Anspruch 1 gelöst. Bevorzugte Ausführungsformen sind in den abhängigen Ansprüchen 2 bis 12 beschrieben. Die Verwendung des erfindungsmäßen Gebäudebauelements sowie des Verbund-Materials sind in den unabhängigen Ansprüchen 13 und 14 beschrieben. Des Weiteren wird Wärmedämmverbundsystem umfassen das erfindungsgemäße Gebäudebauelement gemäß Anspruch 15 beschrieben.

Gegenstand der vorliegenden Erfindung ist zunächst ein Verbund-Werkstoff, umfassend als Komponente (i) mindestens einen nanoporösen Polymerschaumstoff, erhältlich durch Umsetzung von mindestens einem Epoxidharz mit mindestens einem amphiphilen Epoxidharzhärter in Wasser im Sinne einer bzw. durch Phaseninversionspolymerisation, und als Komponente (ii) mindestens einen anorganischen Füllstoff und/oder anorganische Fasern, mit der Maßgabe, dass Glashohlkugeln als Füllstoffe ausgeschlossen sind.

Bezüglich des Verbund-Werkstoffes gilt, dass die Komponenten (i) und (ii) in unterschiedlicher Weise miteinander kombiniert sein können. So kann der Verbund-Werkstoff beispielsweise die Komponenten (i) und (ii) in schichtenförmiger Anordnung enthalten. Der Verbund-Werkstoff kann die Komponenten (i) und (ii) auch in der Weise enthalten, dass die Komponente (ii) in eine Matrix aus der Komponente (i) eingebunden ist; dabei ist es bevorzugt, die Komponente (ii) im Zuge der Herstellung der Komponente (i) durch Phaseninversionspolymerisation einzubringen.

Ein weiterer Erfindungsgegenstand ist die Verwendung des erfindungsgemäßen Verbund-Werkstoffs zur Wärmedämmung von Gebäuden und/oder Gebäudeteilen.

Ein weiterer Erfindungsgegenstand ist die Verwendung des erfindungsgemäßen Verbundwerkstoffs zur Herstellung von Gebäudebauelementen. Unter einem "Gebäudebauelement" im Sinne der vorliegenden Erfindung wird ein konstruktiver Bestandteil eines Gebäudes oder Gebäudeteils verstanden. Ein Gebäudebauelement kann beispielsweise ein Wand-, Dach-, Decken- oder Fassadenelement sein, und zwar sowohl für den Innenbereich, als auch für den Außenbereich.

Unter nanoporösen Polymerschaumstoffen sind Polymere zu verstehen, die innere Hohlräume aufweisen. Dabei handelt es sich um schwammartige Strukturen, die sowohl Makro- und/oder auch Mikroporen aufweisen, wobei üblicherweise die Mikroporen dominieren und wobei die Mikroporen mittlere Querschnitte im Bereich von 10 bis 500 nm und insbesondere von 10 bis 100 nm aufweisen.

Die Natur der anorganischen Füllstoffe und/oder anorganischen Fasern unterliegt - außer der oben bereits genannten Maßgabe, dass Glashohlkugeln als Füllstoffe ausgeschlossen sind - an sich keiner Beschränkung. Als Komponente (ii) der erfindungsgemäßen Verbund-Werkstoffe können entweder ausschließlich anorganische Füllstoffe oder

ausschließlich anorganische Fasern oder eine Kombination von anorganischen Füllstoffen und anorganischen Fasern eingesetzt werden.

In einer Ausführungsform weist die Komponente (ii) wärmeisolierende Eigenschaften auf.

Vorzugsweise ist die Komponente (ii) im Verbund-Werkstoff in einer Menge im Bereich von 2 bis 90 Vol.-%, bezogen auf das Gesamtvolumen des Verbund-Werkstoffes und gemessen bei Raumtemperatur, enthalten. "Raumtemperatur" im Sinne der vorliegenden Erfindung ist eine Temperatur bei etwa 20°C.

Die Raumform der anorganischen Füllstoffe ist beliebig, sie kann beispielsweise kugelförmig, quaderförmig, würfelförmig oder ellipsoid sein, aber auch eine unregelmäßige Geometrie aufweisen. Vorzugsweise setzt man anorganische Füllstoffe ein, deren maximaler Durchmesser im Bereich von 10 nm bis 5 cm liegt. Für Gebäudebauelemente, die eine statisch, tragende Funktion haben, werden vorzugsweise Füllstoffe eingesetzt, deren maximaler Durchmesser im Bereich von 10 nm bis 1000 μm liegt, z.B. im Bereich von 50 nm bis 500 μm, 1μm bis 200μm, 10μm bis 100μm oder 25 μm bis 75 μm. Für Gebäudebauelemente, die eine dämmende Funktion haben, werden vorzugsweise Füllstoffe eingesetzt, deren maximaler Durchmesser im Bereich von 0,1 mm bis 5 cm liegt, z.B. im Bereich von 0,5 mm bis 4 cm, 1 mm bis 2 cm, 5 mm bis 1,5 cm oder 7,5 mm bis 1 cm.

Die innere Struktur der anorganischen Füllstoffe ist beliebig, so können die Füllstoffe in dem Sinne kompakt sein, dass sie keine inneren Hohlräume aufweisen, sie können jedoch auch innere Hohlräume aufweisen. In einer Variante weisen die inneren Hohlräume der Füllstoffe maximale Durchmesser im Bereich von 10 bis 1000 nm auf.

Länge und Durchmesser der anorganischen Fasern unterliegen keinen besonderen Beschränkungen. Vorzugsweise setzt man anorganische Fasern ein, deren maximaler Durchmesser im Bereich von 10 nm bis 5 mm liegt. Die innere Struktur der anorganischen Fasern ist beliebig, so können die Füllstoffe in dem Sinne kompakt sein, dass sie keine inneren Hohlräume aufweisen, sie können jedoch auch innere Hohlräume aufweisen. In einer Variante weisen die inneren Hohlräume der Fasern maximale Durchmesser im Bereich von 10 bis 1000 nm auf.

Die erfindungsgemäßen Verbund-Werkstoffe enthalten in einer Ausführungsform Substanzen, die die Brandschutz-Eigenschaften verbessern. Dies kann einerseits dadurch realisiert werden, dass die Verbindungen (ii) bereits an sich die Brandschutz-Eigenschaften der Verbund-Werkstoffe positiv beeinflussen, andererseits dadurch, dass weitere Substanzen in die Verbund-Werkstoffe integriert sind, was sich in besonders einfacher Weise im Zuge der Phaseninversionspolymerisation bewerkstelligen lässt. Ein Beispiel für solche geeigneten Brandschutz-Zusätze ist das Brandschutzmittel VP 5453/4 der Firma Cognis.

In einer Ausführungsform sind in die Verbund-Werkstoffe ein oder mehrere Additive aus der Gruppe der Brandschutzadditive, Hydrophobierungsmittel und Biozide in den Verbund-Werkstoff integriert.

Die erfindungsgemäßen Verbund-Werkstoffe zeichnen sich durch eine geringe Wärmeleitfähigkeit bei hoher mechanischer Festigkeit aus. Dies macht die Materialien in Hinblick auf die Verwendung als konstruktiven, mechanisch belastbaren Wärmedämm-Materialien besonders attraktiv.

<u>Zu den Epoxidharzen (E)</u>

Die Epoxidverbindungen (E) umfassen Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche.

Vorzugsweise umfassen die Epoxidverbindungen Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren).

Die Epoxidäquivalentgewichte dieser Epoxidverbindungen liegen vorzugsweise zwischen 85 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole kommen eignen sich vorzugsweise folgende Verbindungen: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind als Verbindungen (E) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin, Isosorbid und Bis-(4-hydroxycyclohexyl)-2,2-propan genannt.

Es können auch Polyglycidylether von Polycarbonsäuren als Verbindungen (F) verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidverbindungen (E) verwendet werden.

Bei der Herstellung von nanoporösen Polymerschaumstoffen, bei der man wie oben gesagt die erfindungsgemäßen Härter (H) in wässrigem Milieu mit Epoxidverbindungen (E) im Sinne einer Phaseninversionspolymerisation (PIP) umsetzt, können optional zusätzliche dem Fachmann einschlägig bekannte Zusatzstoffe und/oder Verarbeitungshilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

Zu den Epoxidharzhärtern (H)

Unter amphiphilen Epoxidharzhärtern (H) sind solche Epoxidharzhärter zu verstehen, die hydrophile und hydrophobe Strukturelemente aufweisen.

Vorzugsweise setzt man solche amphiphilen Epoxidharzhärter ein, die in Wasser bei 25 °C selbstemulgierend sind und die außerdem in der Lage sind, Epoxidharze (E) in Wasser bei 25 °C zu emulgieren.

Vorzugsweise setzt man solche Härter (H) ein, die erhältlich sind, indem man eine Mischung umfassend die Verbindungen (A), (B) und (C) zu einem Zwischenprodukt umsetzt und dieses Zwischenprodukt anschließend mit einem Polyamin (P) umsetzt, wobei Verbindung (A) mindestens einem epoxidierten Polyalkylenoxid ist, ausgewählt aus der Gruppe umfassen epoxidierten Polyethylenoxide, epoxidierten Polypropylenoxide und Polyethylenpropylenoxide, Verbindung (B) mindestens eine epoxidierte aromatische Hydroxyverbindung ist, ausgewählt aus der Gruppe umfassend Bisphenol-A-Epoxide und Bisphenol-F-Epoxide, und Verbindung (C) mindestens eine aromatische Hydroxyverbindung ist, ausgewählt aus der Gruppe umfassend Bisphenol-A und Bisphenol-F.

In einer Ausführungsform werden ausschließlich die Komponenten (A), (B) und (C) zu dem Zwischenprodukt umgesetzt und dieses weiter mit einem Polyamin (P) umgesetzt.

In einer weiteren Ausführungsform werden zur Herstellung des Zwischenproduktes, das anschließend mit den Polyaminen (P) zum Härter umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.

Zu den Verbindungen (A)

Unter epoxidierten Polyethylenoxiden werden im Rahmen der Erfindung Verbindungen verstanden, die erhältlich sind, indem man die beiden terminalen OH-Gruppen von Polyethylenoxid in Oxirangruppen überführt, beispielsweise durch Umsetzung mit Epichlorhydrin. Das eingesetzte Polyethylenoxid kann dabei ein mittleres Molgewicht im Bereich von 80 bis 3000 aufweisen; es kann hergestellt werden, indem die Polymerisation des Ethylenoxids auf einem Alkylendiol mit C2-C18 in der dem Fachmann bekannten Weise gestartet wird.

Unter epoxidierten Polypropylenoxiden werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C2-C18 in der dem Fachmann bekannten Weise gestartet wird.

Unter Polyethylenpropylenoxiden werden im Rahmen der Erfindung Verbindungen verstanden, die erhältlich sind, indem man die beiden terminalen OH-Gruppen von Polyethylenpropylenoxid in Oxirangruppen überführt, beispielsweise durch Umsetzung mit Epichlorhydrin. Das eingesetzte Polyethylenpropylenoxid kann dabei ein mittleres Molgewicht im Bereich von 80 bis 3000 aufweisen. Unter Polyethylenpropylenoxid werden Verbindungen verstanden, die durch Copolymerisation von Ethylen- und Propylenoxid erhältlich sind, wobei die Polymerisation der beiden Reaktanden gleichzeitig oder blockweise durchgeführt werden kann, indem die Polymerisation des Propylenoxids und/oder des Ethylenoxids auf einem Alkylendiol mit C2-C18 in der dem Fachmann bekannten Weise gestartet wird.

Die Verbindungen (A) können einzeln oder im Gemisch miteinander eingesetzt werden.

Zu den Verbindungen (B)

Unter Bisphenol-A-Epoxiden werden im Rahmen der Erfindung wie allgemein üblich Verbindungen verstanden, die erhältlich sind, indem man Bisphenol-A mit Epichlorhydrin umsetzt und/oder dieses durch Weitereaktion mit Bisphenol A polymerisiert . Diese Verbindungen sind daher auch unter der Bezeichnung Bisphenol-A-diglycidylether oder allgemein als Epoxidharze bekannt. Handelsübliche Produkte sind Epikote 828, 1001, 1002, 1003, 1004 u.a. der Firma Hexion (ehemals Shell).

Die Molekulargewichte der eingesetzten Bisphenol-A-epoxide liegen vorzugsweise im Bereich von 380 bis 3000.

Unter Bisphenol-F-Epoxiden werden im Rahmen der Erfindung wie allgemein üblich Verbindungen verstanden, die erhältlich sind, indem man Bisphenol-F mit

Epichlorhydrin umsetzt und/oder durch weitere Umsetzung mit Bisphenol F polymerisiert. Diese Verbindungen sind daher auch unter der Bezeichnung Bisphenol-F-Diglycidylether oder allgemein als Bisphenol F Epoxidharze bekannt.

Die Molekulargewichte der eingesetzten Bisphenol-F-epoxide liegen vorzugsweise im Bereich von 350 bis 3000.

Die Verbindungen (B) können einzeln oder im Gemisch miteinander eingesetzt werden.

Zu den Verbindungen (C)

Bisphenol-A ist dem Fachmann einschlägig bekannt und wird durch folgende Formel charakterisiert:

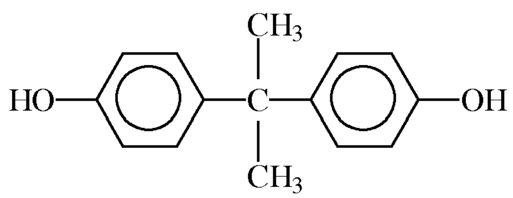

Bisphenol-A

Bisphenol-F ist dem Fachmann ebenfalls einschlägig bekannt.

Die Verbindungen (C) können einzeln oder im Gemisch miteinander eingesetzt werden.

Zu den Verbindungen (P)

Als Polyamine (P) kommen im Rahmen der vorliegenden Erfindung primäre und/oder sekundäre Amine mit mindestens zwei Stickstoffatomen und mindestens zwei aktiven Amino-Wasserstoffatomen pro Molekül zum Einsatz. Es können aliphatische, aromatische, aliphatisch-aromatische, cycloaliphatische und heterocyclische Di- und Polyamine benutzt werden. Beispiele für geeignete Polyamine (P) sind:

Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, 1,3-Bis(aminomethyl)cyclohexan, die Mischung der über eine Methylenbrücke verknüpften Poly(cyclohexyl-aromischen)amine (auch als MBPCAA bekannt) und Polyaminoamide. Polyethylenamine, insbesondere Diethylentriamin sind besonders bevorzugt.

Die Verbindungen (P) können einzeln oder im Gemisch miteinander eingesetzt werden.

Zur Herstellung des Zwischenproduktes

In einer Ausführungsform setzt man bei der Herstellung des Zwischenproduktes die Verbindungen (A) und (B) in einem molaren Verhältnis von 0,1:1 bis 5:1 ein.

In einer Ausführungsform stellt man bei der Herstellung des Zwischenproduktes ein molares Verhältnis der

Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, dass man das Äquivalentverhältnis von Oxiranringen in der Summe der Verbindungen (A) und (B) zu reaktiven Wasserstoffatomen der Verbindung (C) auf einen Wert im Bereich von 1,1:1 bis 10:1 einstellt.

In einer weiteren Ausführungsform, nämlich in Fällen, wo im Zuge der Herstellung des Härters auch mindestens eine Verbindung (D) eingesetzt wird, stellt man bei der Herstellung des Zwischenproduktes ein molares Verhältnis der Summe der Verbindungen (A), (B) und (D) (diese Verbindungen enthalten jeweils zwei Oxirangruppen pro Molekül) zu Verbindung C (diese Verbindung enthält zwei OH-Gruppen pro Molekül) im Bereich von 1,1:1,0 bis 10,0:1,0 ein. Dies ist gleichbedeutend damit, dass man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, dass man für jede an einer Reaktion beteiligte Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, dass unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, dass zwar OH-Gruppen oder NH-Gruppen solche reaktiven Gruppen darstellen, nicht aber $NH_2$-Gruppen, bei denen zwei reaktive H-Atome am selben Stickstoffatom sitzen. Hier werden sinnvollerweise innerhalb der funktionellen Gruppe $NH_2$ die beiden Wasserstoffatome als reaktive Gruppe betrachtet, so dass die funktionelle Gruppe $NH_2$ zwei reaktive Gruppen, nämlich die Wasserstoffatome, aufweist.

In einer Ausführungsform führt man die Herstellung des Zwischenproduktes in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C).

Die Epoxidzahl (%EpO) des Zwischenproduktes liegt vorzugsweise unterhalb von 10% EpO, insbesondere unterhalb von < 5% EpO. Die Definition der Epoxidzahl und die Einzelheiten der analytischen Bestimmung können dem Beispielteil dieser Anmeldung entnommen werden.

Zur Herstellung des Härters (H)

Zur Herstellung des Härters wird wie schon gesagt das Zwischenprodukt mit einem Polyamin (P) umgesetzt.

In einer Ausführungsform setzt man das Zwischenprodukt und das Polyamin (P) in solchen Mengen ein, dass das Äquivalentverhältnis der reaktiven H-Atome an den Aminostickstoffatomen von (P) zu den Oxirangruppen in der Zwischenverbindung im Bereich von 4:1 bis 100:1 liegt.

Die Umsetzung des Zwischenproduktes mit dem Polyamin wird vorzugsweise so durchgeführt, dass das Polyamin im Überschuss vorgelegt wird, so dass sichergestellt ist, dass im wesentlichen 1 Molekül des Polyamins, vorzugsweise Diethylentriamin, mit jeweils einer der Epoxidgruppen der Zwischenverbindung reagiert. Überschüssiges Amin kann abdestilliert werden um den Gehalt an freiem Amin möglichst niedrig zu halten.

Zur Phaseninversionspolymerisation (PIP)

Die Komponente (i) wird vorzugsweise mittels Phaseninversionspolymerisation hergestellt. Unter Phaseninversionspolymerisation (PIP) ist folgendes zu verstehen: Man stellt zunächst eine wässrige Emulsion des Epoxidharzes (E) in Wasser her, wobei der amphiphile Epoxidharzhärter (H) als Emulgator fungiert. Dieses System - nachfolgend auch als Reaktionssystem bezeichnet - ist zunächst als Öl-in-Wasser-Emulsion (O/W-Emulsion) anzusprechen. Bei der Öl-Komponente dieser O/W-Emulsion handelt es sich um das Epoxidharz.

Während der nun folgenden Umsetzung von Harz und Härter (Aushärtung im Sinne einer Polyaddition) kommt es zu einer Phaseninversion, d.h. das Reaktionssystem verändert sich von einer Emulsion des Typs O/W zu einer solchen des Typs W/O, in der Wasser als innere Phase von dem aushärtenden Polymer umschlossen wird. Dies liegt daran, dass sich im Zuge der Aushärtung die ursprünglichen Emulgatoreigenschaften des Härters verändern, da dessen Natur sich durch Polyaddition in Richtung zunehmender Hydrophobie wandelt.

Nach vollständiger Aushärtung liegt nun eine poröse Polymermatrix vor, die in den Kavitäten der organischen Matrix die Wasserphase enthält. Die Wasserphase lässt sich gewünschtenfalls durch Trocknung entfernen, wobei luftgefüllte Kavitäten entstehen. Notwendige Bedingung dafür, dass eine Phaseninversionspolymerisation stattfindet ist, dass kein Wasser aus dem Reaktionssystem entweichen kann. Dies kann in verschiedener Weise technisch realisiert werden.

Zum einen kann das Reaktionssystem in eine abgeschlossene Form gegeben werden. Es ist auch möglich,

das Reaktionssystem in ein offenes System zu geben und dann beispielsweise dafür zu sorgen, dass (a) an der Grenzfläche zur Gasphase (meist umgebende Luft) eine ausreichende Luftfeuchtigkeit herrscht, die eine Austrocknung bzw. einen Wasserverlust der oberen Schicht des Reaktionssystems verhindert oder dass (b) die Grenzfläche zur Gasphase abgedeckt wird, beispielsweise durch eine Folie.

Während es sich bei den bisher beschriebenen Varianten der Durchführung der PIP sozusagen um verlustfreie Ausführungsformen handelt, besteht eine weitere Variante der PIP-Durchführung darin, das Reaktionssystem zwar in ein offenes System zu geben, jedoch keine besonderen Vorkehrungen zu treffen, um einen Wasserverlust der Grenzschicht zur Gasphase zu verhindern. In diesem Falle bildet sich in dieser Grenzschicht durch Wasserverlust eine dichte, chemikalienresistente Struktur (die als Klarlack angesprochen werden kann), die eine Wasser-Barriere für den darunter befindlichen Teil des Reaktionssystems bildet, so dass in dieser ungehindert die PIP stattfinden kann. Nach vollständiger Härtung des Reaktionssystems kann man dann die dichte, chemikalienresistente Schicht (die in der Regel 0,1 bis 0,3 mm dick ist), durch mechanisches Abtragen beseitigen.

Dass es sich bei den ausgehärteten Systemen um nanoporöse Strukturen handelt ist bereits optisch daran zu erkennen, dass die erhaltenen Materialien nicht klar sind, sondern weiß.

In einer bevorzugten Ausführungsform wird die PIP so durchgeführt, dass Epoxidharz (E) und Härter (H) in einem Äquivalentverhältnis von 2 : 1 bis 1 : 2 eingesetzt werden. Dabei sind (E) zu (H) Äquivalentverhältnisse von 1 : 1 besonders bevorzugt.

Die PIP ist gekennzeichnet durch eine einleitende Phase, bei der eine O/W-Emulsion vorliegt und eine Aushärtephase, deren beginn mit der Bildung der W/O-Emulsion anzusetzen ist. Die PIP kann bei 0 bis 100% Luftfeuchte durchgeführt werden. Der Wassergehalt des PIP-Reaktionssystems kann im Bereich von 95 bis 20 Gew.-% (bezogen auf das gesamte Reaktionssystem) variiert werden.

Gegebenenfalls können dem Reaktionssystem auch Verdicker zugesetzt werden.

Die Aushärtung des Reaktionssystems kann in einem breiten Temperaturbereich durchgeführt werden, vorzugsweise zwischen °C und 99°C und insbesondere zwischen 5°C und 60°C.

Wie bereits ausgeführt, enthält in einer Ausführungsform der erfindungsgemäße Verbund-Werkstoff für die Verwendung in Gebäudebauelementen die Komponenten (i) und (ii) in der Weise, dass die Komponente (ii) in eine Matrix aus der Komponente (i) eingebunden ist, wobei es bevorzugt ist, die Komponente (ii) im Zuge der Herstellung der Komponente (i) durch Phaseninversionspolymerisation einzubringen. Dies bedeutet, dass die Komponente (ii) - also Fasern und/oder Füllstoffe - dem PIP-Reaktionssystem, das auf die Herstellung der Komponente (i) zielt, zugesetzt wird.

Beispiele geeigneter Substanzen der Komponente (ii) sind insbesondere:

- Als Füllstoffe: anorganische Materialien wie zelluläre, geschlossen- oder offenzellige, mineralische Strukturen, z.B. Mineralschäume, wie Mineralschaumplatten der Firma Sto oder Porenbeton, wie Ytong-Steine in zerkleinerter Form, Vermiculit sowie andere Tonmineralien, oder andere poröse Gesteine (Perlite), sowie Blähglas-Granulate, anorganische Füllstoffe wie z.B. Carbon-Nanotubes der Fa. Bayer, Kieselsäuren (Sipernate oder Aerosile der Fa. Evonik), Silica, Zeolithe;
- Als Fasern: Glasfasern, aber auch natürliche Fasern wie Sepiolith und Wollastonit.

Beispiele

## Abkürzungen

Im Folgenden bedeuten:

- EEW = Epoxidäquivalentgewicht (wie oben beschrieben).
- MW = mittleres Molekulargewicht
- UPM = Umdrehungen pro Minute
- % = Gewichtsprozent, sofern nicht explizit anders angegeben

## Verwendete Rohstoffe

Epoxidharz (E): Chem Res E20 (Cognis GmbH)
Anorganischer Füllstoff: Sto-Mineralschaumplatte (Firma Sto AG) in Würfelform zu einer Kantenlänge von etwa 1 cm geschnitten
Härter (H): Es wurde folgender Härter H1 hergestellt:

Härter H1

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3,5 Stunden gerührt, bis die Epoxidzahl 3,95% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.

Der Überschuss an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.

Es wurden 205,6g einer klaren bernsteinfarbigen Flüssigkeit erhalten mit einer Viskosität (in Substanz, Brookfield, 10Upm, 40°C) von 2140 mPas, einem Feststoffgehalt von 60% und einer Aminzahl von 134.

## Anwendungsbeispiel

Epoxidharz (E) und Härter (H) wurden in einem Rührbecher (Durchmesser 95mm, Höhe 120mm) vorgelegt und mit einem Pendraulikrührer Typ LM34 bei Stufe 1 (ca. 465 Umdrehungen/Minute) voremulgiert. Die eingesetzte Menge an (E) und (H) sind Tabelle 1 zu entnehmen. Eine homogene Weißfärbung zeigte eine entsprechende Homogenisierung an. Anschließend erfolgte portionsweise die Wasserzugabe (die jeweilige Wassermenge ist Tabelle 1 zu entnehmen). Die Rührgeschwindigkeit wurde so angepasst, dass sich gerade kein Thrombus mehr bildete. Nach 5 min Homogenisierung wurde der Füllstoff vorsichtig mit einem Spatel in die vorbereitete Emulsion eingerührt. Die Gesamtzeit vom Voremulgieren bis zur Verarbeitung betrug ca. 7 Minuten. Der Versuch wurde mit einem Äquivalentverhältnis Epoxidharz zu Härter von 1 : 1 durchgeführt.

Einzelheiten zu dem Beispiel 1 können der Tabelle 1 entnommen werden.

Probenvorbereitung

Die Platte für die Wärmeleitfähigkeitsmessung wurde in einer Teflonform, beschichtet mit dem Trennmittel Loxiol G40 (Fa. Cognis), hergestellt. Die Gussmasse wurde bis zur Entformung abgedeckt, jedoch nicht luftdicht verschlossen. Der Prüfkörper wurde nach 48h entformt, die Trocknung benötigte bei 55°C ca. 48h.

Wärmeleitfähigkeitsmessung

Die Wärmeleitfähigkeit wurde nach ISO 8301 gemessen, dies entspricht der Wärmefluss-Messmethode. Die Plattenmaße betrugen 150mm x 150mm, die Schichtdicke variierte zwischen 20mm und 25mm. Zur Messung wurde eine Messapparatur der Firma NETZSCH Typ HFM 436/3/1E verwendet, der Anpressdruck lag bei 65N. Als Messtemperatur wurde 10°C mit einer Temperaturdifferenz von 20K gewählt. Dies ist eine Standardmessung für Wärmedämmstoffe. Die Probe wurde vor der Messung mindestens 72h bei Raumtemperatur gelagert, eine spezielle Lagerung bei Normklima fand nicht statt.

**Tabelle 1- Beispiele:**

| | Beispiel 1 |
|---|---|
| Härter H1 [g] | 125 |
| Chem Res E20 [g] | 113,1 |
| Sto-Mineralschaumplatte, zerkleinert | 89,4 |
| Wasser, v.e. + 1% Bentone EW [g] | 1015,9 |
| Bindemittelgehalt [%] | 15,0 |
| Aushärtungstemperatur | 55°C |
| Dichte [g/cm$^3$] | 0,17 |
| Wärmeleitfähigkeit [W/(m·K)] | 0,039 |

Hinweis: Die Zeile "Bindemittelgehalt" dient lediglich der Information. Unter Bindemittel ist hier einfach das Umsetzungsprodukt von Härter H1 und Epoxidharz (Chem Res E20) zu verstehen. Der Bindemittelgehalt ist dementsprechend der prozentuelle Anteil des so definierten Bindemittels am Gesamtsystem. Exemplarisch sei die Berechnung des Bindemittelgehalts für Beispiel 1 demonstriert: Da die Reaktion von Epoxidharz mit Aminhärter (Härter H1) als Polyaddition ohne Abspaltung von Molekülteilen erfolgt, sind die Massenanteile von Harz und Härter zu addieren, um die Menge des resultierenden Bindemittels zu erhalten: Das eingesetzte Epoxidharz Chemres E 20 ist zu 100% zu berücksichtigen (113,1). Vom eingesetzten Härter H1 sind, da er einen Feststoffgehalt von 60% aufweist, lediglich 0,6 x 125,0g = 75,0g zu berücksichtigen. Daraus ergibt sich die Menge des Bindemittels im System zu 75,0g + 113,1g = 188,1g. Das Gesamtsystem enthält zusätzlich 1015,9 g Wasser, umfasst mithin eine Gesamtmenge von 125g+113,1g+1015,9g = 1254g. Der Bindemittelanteil im Gesamtsystem ergibt sich daraus wie folgt:

$$\%\ \text{Bindemittel} = 188{,}1 \text{ x } 100 / 1254 = 15{,}00\%.$$

**Patentansprüche**

1. Gebäudebauelement umfassend einen Verbund-Werkstoff, umfassend
als Komponente (i) mindestens einen nanoporösen Polymerschaumstoff, erhältlich durch Umsetzung von mindestens einem Epoxidharz mit mindestens einem amphiphilen Epoxidharzhärter in Wasser im Sinne einer Phaseninversionspolymerisation, und
als Komponente (ii) mindestens einen anorganischen Füllstoff und/oder anorganische Fasern, mit der Maßgabe, dass Glashohlkugeln als Füllstoffe ausgeschlossen sind.

2. Gebäudebauelement nach Anspruch 1, wobei man solche Epoxidharzhärter einsetzt, die erhältlich sind, indem man eine Mischung umfassend die Verbindungen (A), (B) und (C) zu einem Zwischenprodukt umsetzt und dieses Zwischenprodukt anschließend mit einem Polyamin (P) umsetzt, wobei
Verbindung (A) mindestens ein epoxidiertes Polyalkylenoxid ist, ausgewählt aus der Gruppe umfassend epoxidierte Polyethylenoxide, epoxidierte Polypropylenoxide und Polyethylenpropylenoxide,
Verbindung (B) mindestens eine epoxidierte aromatische Hydroxyverbindung ist, ausgewählt aus der Gruppe umfassend Bisphenol-A-Epoxide und Bisphenol-F-Epoxide, und
Verbindung (C) mindestens eine aromatische Hydroxyverbindung ist, ausgewählt aus der Gruppe umfassend Bisphenol-A und Bisphenol-F.

3. Gebäudebauelement nach Anspruch 2, wobei das Polyamin (P) Diethylentriamin ist.

4. Gebäudebauelement nach Anspruch 2 oder 3, wobei Verbindung (A) ausgewählt ist aus epoxidierten Polypropylenoxiden und/oder Verbindung (B) ausgewählt ist aus Bisphenol-A-Epoxiden und/oder Verbindung (C) Bisphenol-A ist.

5. Gebäudebauelement nach einem der Ansprüche 1 bis 4, wobei der Verbundwerkstoff als Komponente (ii) mindestens ein funktionales anorganisches Material mit einer zellulären, geschlossen- oder offenzelligen, mineralischen Struktur enthält.

6. Gebäudebauelement nach einem der Ansprüche 1 bis 5, wobei der Verbundwerkstoff die Komponente (ii) in einer Menge im Bereich von 2 bis 90 Vol.-% enthält, bezogen auf das Gesamtvolumen des Verbund-Werkstoffs und gemessen bei Raumtemperatur.

7. Gebäudebauelement nach einem der Ansprüche 1 bis 6, wobei die Komponente (ii) wärmeisolierende Eigenschaften aufweist.

8. Gebäudebauelement nach einem der Ansprüche 1 bis 7, wobei die Komponente (ii) Mineralschäume, vorzugsweise Blähglas, Perlite und/oder Porenbeton, und/oder Kieselsäuren, vorzugsweise Silica und/oder Zeolithe, umfasst.

9. Gebäudebauelement nach einem der Ansprüche 1 bis 8, wobei die Komponente (ii) im Verbund-Werkstoff geordnet, ungeordnet oder in einer Schichtstruktur eingebettet ist.

**10.** Gebäudebauelement nach einem der Ansprüche 1 bis 9, wobei der Verbund-Werkstoff zusätzlich Fasern, elastischen Füllstoffe und/oder Pigmente als Additive enthält und/oder zusätzlich ein oder mehrere Additive aus der Gruppe umfassend Brandschutzadditive, Hydrophobierungsmittel und Biozide.

**11.** Gebäudebauelement nach einem der Ansprüche 1 bis 10, wobei das Gebäudebauelement ein Wand-, Dach-, Decken- oder Fassadenelement ist.

**12.** Gebäudebauelement nach einem der Ansprüche 1 bis 11, wobei das Gebäudebauelement als Formköper oder Dämmplatte ausgebildet ist.

**13.** Verwendung des Gebäudebauelements nach einem der Ansprüchen 1 bis 12 zur Wärmedämmung an Gebäuden oder Gebäudeteilen im Innen- und/oder Aussenbereich.

**14.** Verwendung des Verbund-Werkstoffs wie in einem der Ansprüche 1 bis 10 beschrieben zur Herstellung von Gebäudebauelementen.

**15.** Wärmedämmverbundsystem umfassend mindestens ein Gebäudebauelement nach einem der Ansprüche 1 bis 12.

Europäisches Patentamt
European Patent Office
Office européen des brevets

# EUROPÄISCHER RECHERCHENBERICHT

Nummer der Anmeldung
EP 10 16 3186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CA 2 685 637 A1 (COGNIS IP MAN GMBH [DE]) 15. Mai 2010 (2010-05-15) * Seite 13, Zeile 36; Ansprüche 1-6; Tabelle 1 * * Seiten 14-17 * | 1-15 | INV. C08J9/00 C08J9/28 |
| Y | DE 10 2005 029145 A1 (COGNIS IP MAN GMBH [DE]) 28. Dezember 2006 (2006-12-28) * Absatz [0053]; Ansprüche; Tabelle 2 * | 1-15 | |
| Y | GB 2 355 465 A (KINGSPAN IND INSULATION LTD [GB]) 25. April 2001 (2001-04-25) * Ansprüche; Beispiele * | 1-15 | |
| A | US 4 608 405 A (DEGOOYER WILLIAM J [US]) 26. August 1986 (1986-08-26) * das ganze Dokument * | 1-15 | |

RECHERCHIERTE SACHGEBIETE (IPC)
C08J
C08G

Der vorliegende Recherchenbericht wurde für alle Patentansprüche erstellt

| Recherchenort | Abschlußdatum der Recherche | Prüfer |
|---|---|---|
| München | 25. Oktober 2010 | Ellrich, Klaus |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 16 3186

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2010

| Im Recherchenbericht angeführtes Patentdokument | Datum der Veröffentlichung | Mitglied(er) der Patentfamilie | Datum der Veröffentlichung |
|---|---|---|---|
| CA 2685637 A1 | 15-05-2010 | EP 2186842 A1 | 19-05-2010 |
| | | US 2010127204 A1 | 27-05-2010 |
| DE 102005029145 A1 | 28-12-2006 | AT 427971 T | 15-04-2009 |
| | | EP 1736496 A1 | 27-12-2006 |
| | | ES 2325174 T3 | 27-08-2009 |
| | | JP 2007002252 A | 11-01-2007 |
| | | US 2007003766 A1 | 04-01-2007 |
| GB 2355465 A | 25-04-2001 | AT 319775 T | 15-03-2006 |
| | | AU 7912000 A | 30-04-2001 |
| | | CA 2388304 A1 | 26-04-2001 |
| | | DE 60026556 T2 | 14-12-2006 |
| | | WO 0129133 A1 | 26-04-2001 |
| | | IE 20000787 A1 | 30-05-2001 |
| | | US 2002198268 A1 | 26-12-2002 |
| US 4608405 A | 26-08-1986 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1518875 A